(19)

Europäisches Patentamt

European Patent Office

Office européen des brevets

(11) **EP 2 734 386 B1**

(12) **EUROPEAN PATENT SPECIFICATION**

(45) Date of publication and mention
of the grant of the patent:
**09.09.2015 Bulletin 2015/37**

(21) Application number: **12738438.6**

(22) Date of filing: **17.07.2012**

(51) Int Cl.:
***B60C 3/04*** (2006.01)

(86) International application number:
**PCT/EP2012/063990**

(87) International publication number:
**WO 2013/014029 (31.01.2013 Gazette 2013/05)**

(54) **LIGHTWEIGHT TYRE**

LEICHTGEWICHTIGER REIFEN

PNEU LÉGER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2011 FR 1156683**
**24.10.2011 US 201161550863 P**

(43) Date of publication of application:
**28.05.2014 Bulletin 2014/22**

(73) Proprietors:
 • **Compagnie Générale des Etablissements Michelin**
 **63000 Clermont-Ferrand (FR)**
 • **Michelin Recherche et Technique S.A.**
 **1763 Granges-Paccot (CH)**

(72) Inventor: **FERIGO, Hervé**
 **F-63040 Clermont-Ferrand Cedex 9 (FR)**

(74) Representative: **Sidhu, Alban et al**
 **MFP Michelin**
 **Cer Ladoux-F35-DGD/PI**
 **23, place des Carmes-Déchaux**
 **63040 Clermont-Ferrand Cedex 9 (FR)**

(56) References cited:
 **WO-A1-2011/043041    FR-A1- 2 499 473**
 **GB-A- 2 224 703**

**Description**

FIELD OF THE INVENTION

The present invention relates to the radial tyres for land vehicles and more particularly to radial tyres for passenger vehicles. The invention relates most particularly to lightweight tyres.

BACKGROUND

Research on tyres serving to reduce the energy consumption of a vehicle is presently assuming increasing importance. Among the promising approaches explored by tyre designers, mention may be made of reducing the rolling resistance of tyres, especially by the use of low-hysteresis materials, but also reducing the weight of tyres. It has been proposed to reduce the weight of tyres by reducing the thicknesses of material and the densities of the reinforcing elements (use of textile cords) or of the rubber compounds, or by using reinforcing elements enabling certain volumes of internal rubber compounds, for example in the region of the bead, to be reduced. Such tyres are discussed for example in U.S. patent 6,082,423 and in the documents cited therein.

The weight reduction obtained is generally limited because the measures taken to reduce weight also result in tyres having reduced structural rigidity, shorter wear lifetimes, increased noise emission and reduced endurance.

Another way of reducing the mass of a tyre consists in generally reducing its dimensions. Of course, such a reduction is not without consequence on the service capability of the tyre, its wear lifetime and the endurance of its structure for a given service load on a wheel of the vehicle. International standards such as those of the ETRTO (European Tyre and Rim Technical Organisation) or JATMA (Japan Automobile Tyre Manufacturers Association) define, for each nominal dimension, the physical dimensions of the tyre, such as its sectional height and its sectional width when fitted onto a rim of given diameter and width. They also define a "load capacity" of the tyre, that is to say the maximum admissible static load on a wheel of the vehicle at a defined service pressure.

In these standards, the load capacities are deduced from the nominal dimensions using semi-empirical relationships. These relationships set a maximum static deflection (normalized by the dimensions), of a tyre and are based on a standard geometry of the section profiles of the tyres of the current technology. They predict that the load capacity of tyres of course decreases when, all other things being equal, the section height or width decreases.

However, these standards leave the designer with certain degrees of freedom regarding the dimensions of the section profile that it is possible to use in the context of reducing the mass and rolling resistance of a tyre. Most of the mass of a tyre and most of its rolling resistance stem from the region of its crown. Reducing the width of the crown would therefore result in an almost proportional increase in the contribution of the crown to the mass and, as experience has shown, an increase in its contribution to rolling resistance.

Document GB2224703-A discloses a tire according to the preamble of claim 1.

SUMMARY OF THE INVENTION

An objective of the present invention is, for a nominal size of a given tyre, when fitted onto a given mounting rim, and at a given service pressure, to make the best possible use of the design of the tyre geometry in order to reduce the weight of the tyre and to reduce its rolling resistance, while maintaining its main performance characteristics, in particular its load capacity and its resistance to unseating.

This objective is achieved by a tyre having a rotation axis and comprising:

two beads designed to come into contact with a mounting rim, each bead comprising at least one annular reinforcing structure, thereby defining a mid-plane perpendicular to the rotation axis of the tyre and being located equidistant from the annular reinforcing structures of each bead, the annular reinforcing structures having, in any radial cross section, a radially innermost point;

two side walls extending the beads radially outwards, the two side walls joining in a crown comprising a crown reinforcement, wherein the crown reinforcement has two axial ends, said crown reinforcement being surmounted by a tread;

at least one carcass reinforcement extending from the beads through the side walls as far as the crown, the carcass reinforcement comprising a plurality of radially oriented carcass reinforcement elements and being anchored in the two beads by an upturn around the annular reinforcing structure,

wherein, when the tyre is fitted onto the mounting rim and inflated to its service pressure:

the tyre has a maximum axial width SW such that the ratio TW/SW ≤ 75% (and preferably TW/SW ≤ 73%), where TW denotes the axial distance between the two axial ends of the crown reinforcement, the maximum axial width SW being reached at a radial distance X from the radially innermost point of the annular reinforcing structures;

the axial distance RW of the two points of intersection of the axial direction passing through the radially innermost point of the annular reinforcing structures with the external surface of the tyre is such that TW/RW ≤ 85% (and preferably TW/RW ≤ 83%);

the tyre satisfies the following three conditions: X/SH ≤ 50%, Y/SH ≥ 80% and Z/SH ≥ 90%, where SH denotes the distance between the radially outermost point of the tyre and the radially innermost point of the annular reinforcing structures, Y denotes the radial distance between (i) the points of the carcass reinforcement having the same axial positions as the axial ends of the crown reinforcement and (ii) the radially innermost point of the annular reinforcing structures, and Z denotes the radial distance between the radially outermost point of the carcass reinforcement and the radially innermost point of the annular reinforcing structures;

the absolute value of the angle α (alpha) between the tangent to the carcass reinforcement at the points of the carcass reinforcement having the same axial positions as the axial ends of the crown reinforcement and the axial direction is less than or equal to 22°; and

at any point on the carcass reinforcement, the radius of curvature ρ is such that

$$\rho = \frac{R_S^2 - R_E^2}{2R},$$

where $R_S$ is the radial distance between the rotation axis of the tyre and the radially outermost point of the carcass reinforcement, $R_E$ is the radial distance between the rotation axis of the tyre and the axial position where the tyre reaches its maximum axial width SW, and R is the radial distance between the rotation axis of the tyre and the point in question on the carcass reinforcement.

Preferably, the tyre has only a single carcass reinforcement so as to reduce its weight.

The invention also relates to an assembly formed by a mounting rim and a tyre as described above.

BRIEF DESCRIPTION OF THE DRAWINGS

Figure 1 shows a prior art tyre.

Figure 2 shows a partial perspective view of a prior art tyre.

Figure 3 shows, in radial section, one half of a tyre according to an embodiment of the invention.

Figure 4 shows part of the tyre of Figure 3.

Figure 5 illustrates the parameters used to describe an inflated carcass reinforcement in equilibrium.

DETAILED DESCRIPTION OF THE FIGURES

When employing the term "radial", a distinction should be made between several different uses of the word by a person skilled in the art. Firstly, the expression refers to a radius of the tyre. It is in this sense that a point P1 is said to be "radially inside" a point P2 (or "radially to the inside" of point P2) if it is closer to the rotation axis of the tyre than point P2. Conversely, a point P3 is said to be "radially outside" a point P4 (or "radially to the outside" of point P4) when it is further away from the rotation axis of the tyre than point P4. The expression "radially inwardly (or outwardly)" means going towards smaller (or larger) radii. When distances are referred to as radial distances, this meaning of the term also applies.

A thread or a reinforcement is said to be "radial" when the thread or reinforcing elements of the reinforcement make an angle of not less than 80° but not exceeding 90° with the circumferential direction. It should be pointed out, that in the present document, the term "thread" should be understood in a very general sense and comprises threads in the form of monofilaments, multifilaments, a cord, a yarn or an equivalent assembly, irrespective of the material constituting the thread or the surface treatment for promoting adhesion to the rubber.

Finally, the term "radial section" or "radial cross section" is understood here to mean a section or cross section in a plane that contains the rotation axis of the tyre.

An "axial" direction is a direction parallel to the rotation axis of the tyre. A point P5 is said to be "axially inside" a point P6 (or "axially to the inside" of point P6) if it is closer to the mid-plane of the tyre than point P6. Conversely, a point P7 is said to be "axially outside" a point P8) or "axially to the outside" of point P8) if it is further away from the mid-plane of the tyre than point P8. The "mid-plane" of the tyre is the plane perpendicular to the rotation axis of the tyre lying equidistant from the annular reinforcing structures of each bead.

A "circumferential" direction is a direction perpendicular both to a radius of the tyre and to the axial direction.

In the context of this document, the expression "rubber compound" denotes a rubber compound comprising at least one elastomer and at least one filler.

The "external surface" of the tyre denotes here the surface of the tyre which, when the tyre is fitted onto a mounting rim and inflated to its service pressure, is in contact with the atmosphere (or with the mounting rim), as opposite to its "internal surface", which is in contact with the inflation gas.

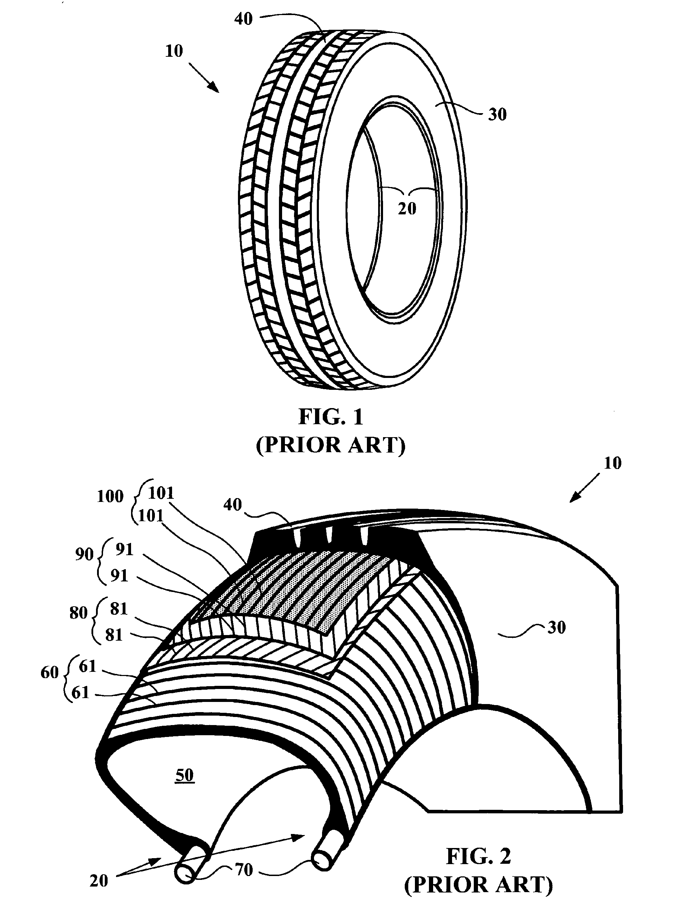

Figure 1 shows schematically a prior art tyre 10. The tyre 10 comprises a crown, having a crown reinforcement (not visible in Figure 1) surmounted by a tread 40, two sidewalls 30 extending the crown radially inwards, and two beads 20 radially inside the sidewalls 30.

Figure 2 shows schematically a partial perspective view of a prior art tyre 10 and illustrates the various components of the tyre. The tyre 10 comprises a carcass reinforcement 60 consisting of threads 61 embedded in a rubber composition, and two beads 20 each comprising annular reinforcing structures 70 which hold the tyre 10 on the rim (not shown). The carcass reinforcement 60 is anchored in each of the beads 20. The tyre 10 further includes a crown reinforcement comprising two plies 80 and 90. Each of the plies 80 and 90 is reinforced by filamentary reinforcing elements 81 and 91 which are parallel in each ply and crossed from one layer to the next, making angles of between 10° and 70° to the circumferential direction. The tyre further includes a hooping reinforcement 100 placed radially to the outside of the crown reinforcement, this hooping reinforcement being formed from circumferentially oriented reinforcing elements 101 wound in a spiral. A tread 40 is placed on the hooping reinforcement; it is via this tread 40 that the tyre 10 comes into contact with the road. The tyre 10 shown is a "tubeless" tyre: it includes an "inner liner" 50 made of a butyl-based rubber composition impermeable to the inflation gas and covering the internal surface of the tyre.

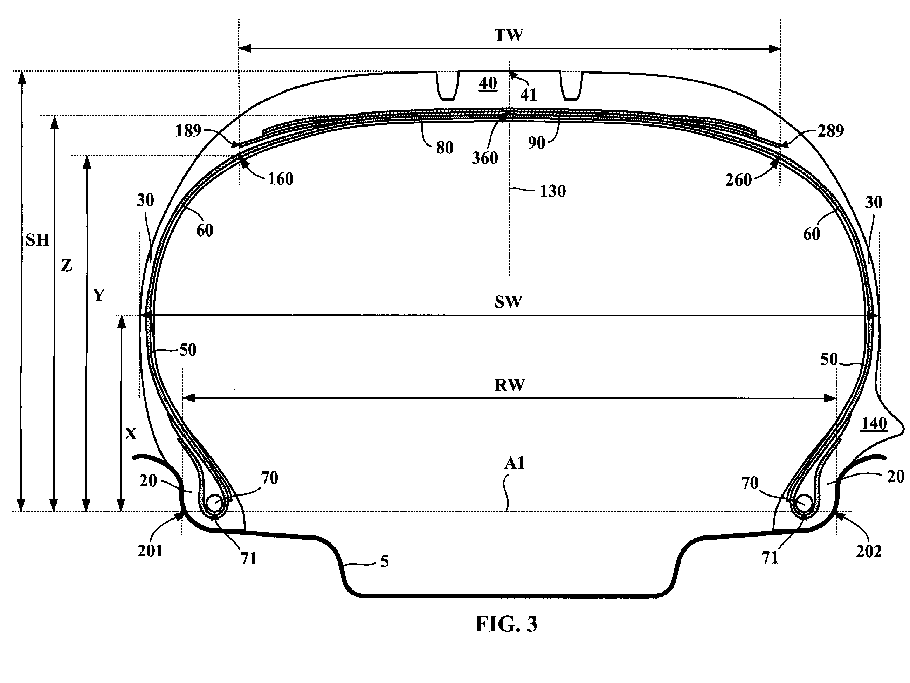

Figure 3 shows, in radial cross section, one half of a tyre according to an embodiment of the invention. This tyre has a rotation axis (not shown) and comprises two beads 20 designed to come into contact with a mounting rim 5. Each bead has an annular reinforcing structure, in this case a bead wire 70. Here, the two bead wires 70 have the same diameter and two points 71 qualify as radially innermost point of the bead wires 70.

The tyre 10 has two side walls 30 extending the beads radially towards the outside, the two side walls 30 joining in a crown having a crown reinforcement formed by the plies 80 and 90. The crown reinforcement has two axial ends 189 and 289. In the present case, these ends coincide with the axial ends of the radially inner ply 80, but this is not an essential feature of the invention - it is also possible to provide a radially outer ply 90 that extends axially beyond the inner ply, on only one side of the mid-plane 130, or on each side of this plane, without departing from the scope of the invention. The crown reinforcement is surmounted by a tread 40. In principle, it would be possible also to provide a hooping reinforcement, such as the hooping reinforcement 100 of the tyre shown in Figure 2, but in the present case the weight of the tyre was minimized by not providing a hooping reinforcement.

The tyre 10 comprises a single radial carcass reinforcement 60 extending from the beads 20 through the side walls 30 to the crown, the carcass reinforcement 60 comprising a plurality of carcass reinforcing elements. It is anchored in the two beads 20 by an upturn around the bead wire 70.

When the tyre 10 is fitted onto the mounting rim 5 and inflated to its service pressure, it meets several criteria.

Firstly, it has a maximum axial width SW such that the ratio TW/SW $\leq$ 75%, where TW denotes the axial width of the crown reinforcement, i.e. the axial distance between the two axial ends 189 and 289 of the crown reinforcement. In this case, TW/SW = 73%. The maximum axial width SW is reached at a radial distance X from the radially innermost point of the annular reinforcing structures. It should be pointed out that when determining the width SW, no account is taken of protrusions such as the protecting rib 140. It should also be pointed out that, when the carcass reinforcement has a significant axial thickness, it is appropriate to measure the maximum axial width SW at the neutral fibre of the reinforcing elements 61 (see Fig. 2) constituting it.

Secondly, the axial distance RW of the two points of intersection 201 and 202 of the axial direction A1 passing through the radially innermost point(s) 71 of the bead wires 70 with the external surface of the tyre is such that TW/RW $\leq$ 85%. In this case TW/RW = 83%.

Thirdly, X/SH $\leq$ 50% (and preferably, X/SH $\leq$ 45%), where SH denotes the distance between the radially outermost point 41 of the tyre, and the radially innermost point 71 of the annular reinforcing structures 70. In this case, X/SH = 50%.

Fourthly, Y/SH ≥ 80%, where Y denotes the radial distance between (i) the points 160 and 260 of the carcass reinforcement 60 having the same axial positions as the axial ends 189 and 289 of the crown reinforcement and (ii) the radially innermost point 71 of the annular reinforcing structures 70, SH being defined as above. In this case, Y/SH = 80%.

Fifthly, Z/SH ≥ 90%, where Z denotes the radial distance between the radially outermost point 360 of the carcass reinforcement 60 and the radially innermost point 71 of the annular reinforcing structures 70, SH being defined as above. In this case, Z/SH = 90%.

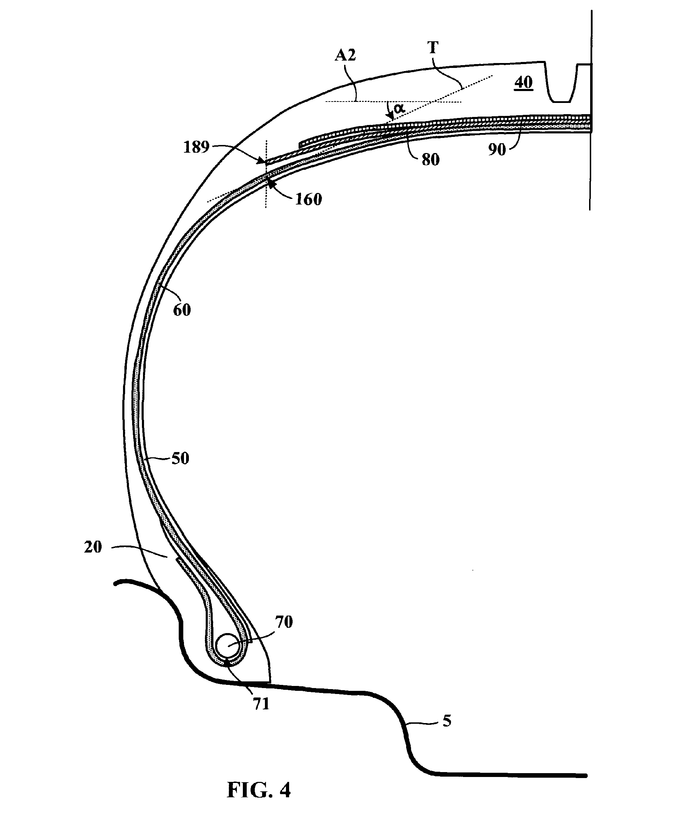

Sixthly, the absolute value of the angle α (alpha) - indicated in Figure 4, between the tangent T to the carcass reinforcement 60 at the points 160 and 260 of the carcass reinforcement 60 having the same axial positions as the axial end points 189 and 289 of the crown reinforcement and the axial direction, is less than or equal to 22°.

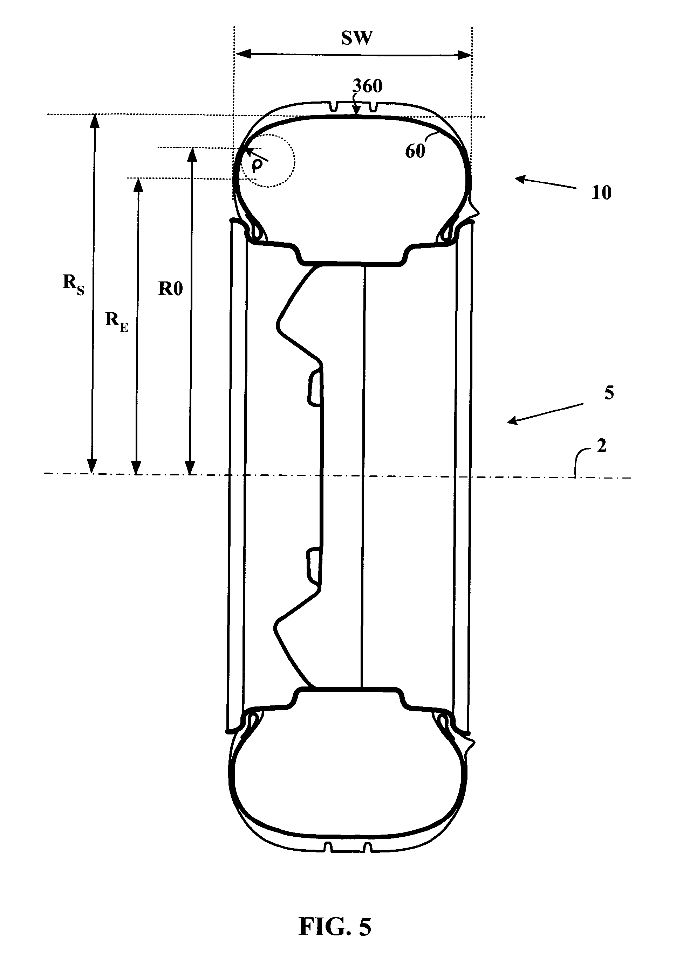

Finally, at any point on the carcass reinforcement 60, the radius of curvature ρ is such that

$$\rho = \frac{R_S^2 - R_E^2}{2R},$$

where $R_S$ is the radial distance between the rotation axis of the tyre and the radially outermost point of the carcass reinforcement 60, $R_E$ is the radial distance between the rotation axis of the tyre and the axial position where the tyre reaches its maximum axial width SW, and R is the radial distance between the rotation axis of the tyre and the point in question on the carcass reinforcement. These values are indicated in Figure 5, together with the radius of curvature ρ for a radial position R=R0. The reference 2 indicates here the rotation axis of the tyre 10.

As is well known to those skilled in the art, the latter criterion corresponds to the equilibrium condition for an inflated radial carcass reinforcement. It serves in particular to differentiate the invention from fortuitous prior art representing uninflated tyres for which some of the criteria listed above would be fulfilled in the uninflated state, but which would no longer be fulfilled if the tyre were to be inflated and the carcass reinforcement were to be considered in the equilibrium state. An example of this is shown in Figure 1 of document WO 1999/022952 which shows a tyre that is manifestly not in equilibrium, as the fold in the carcass reinforcement close to the ends of the crown reinforcement shows.

A tyre according to an embodiment of the invention, of 205/55 R 16 size, was compared with a Michelin Energy Saver reference tyre of the same size. The following table gives the essential geometric parameters:

Table I

|  | Reference tyre | Tyre according to the invention |
|---|---|---|
| TW/RW | 1.07 | 0.83 |
| TW/SW | 0.82 | 0.73 |
| X/SH | 0.53 | 0.50 |
| Y/SH | 0.89 | 0.90 |
| Z/SH | 0.82 | 0.90 |
| α (alpha) | 22 | 22 |

The tyre according to an embodiment of the invention is 1.8 kg lighter than the reference tyre (weighing 6.2 kg instead of 8.0 kg), but its rolling resistance at 90 km/h is 1.96 kg/T lower and its main performance characteristics are equivalent, in particular its load capacity corresponding to an index of 91 (603 daN) and its ability not to unseat.

**Claims**

1. Tyre having a rotation axis and comprising:

   two beads (20) designed to come into contact with a mounting rim (5), each bead comprising at least one annular reinforcing structure (70), thereby defining a mid-plane perpendicular to the rotation axis of the tyre and being located equidistant from the annular reinforcing structures of each bead, the annular reinforcing structures having, in any radial cross section, a radially innermost point (71);
   two side walls (30) extending the beads radially outwards, the two side walls joining in a crown comprising a crown reinforcement (80, 90), wherein the crown reinforcement has two axial ends, said crown reinforcement being surmounted by a tread (40);

at least one carcass reinforcement (60) extending from the beads through the side walls as far as the crown, the carcass reinforcement comprising a plurality of radially oriented carcass reinforcement elements and being anchored in the two beads by an upturn around the annular reinforcing structure; **characterized in that** when the tyre is fitted onto a mounting rim and inflated to its service pressure:

the tyre has a maximum axial width SW such that the ratio TW/SW ≤ 75%, where TW denotes the axial distance between the two axial ends (189, 289) of the crown reinforcement, the maximum axial width SW being reached at a radial distance X from the radially innermost point of the annular reinforcing structures ;

the axial distance RW of the two points of intersection of the axial direction passing through the radially innermost point of the annular reinforcing structures with the external surface of the tyre is such that TW/RW ≤ 85%;

the tyre satisfies the following three conditions: X/SH ≤ 50%, Y/SH ≥ 80% and Z/SH ≥ 90%, where SH denotes the distance between the radially outermost point of the tyre and the radially innermost point of the annular reinforcing structures, Y denotes the radial distance between (i) the points of the carcass reinforcement having the same axial positions as the axial ends of the crown reinforcement and (ii) the radially innermost point of the annular reinforcing structures, and Z denotes the radial distance between the radially outermost point of the carcass reinforcement and the radially innermost point of the annular reinforcing structures;

the absolute value of the angle α (alpha) between the tangent to the carcass reinforcement at the points of the carcass reinforcement having the same axial positions as the axial ends of the crown reinforcement and the axial direction is less than or equal to 22°; and

at any point of the carcass reinforcement, the radius of curvature ρ is such that

$$\rho = \frac{R_S^2 - R_E^2}{2R},$$

where $R_S$ is the radial distance between the rotation axis of the tyre and the radially outermost point (360) of the carcass reinforcement, $R_E$ is the radial distance between the rotation axis of the tyre and the axial position where the tyre reaches its maximum axial width SW, and R is the radial distance between the rotation axis of the tyre and said point of the carcass reinforcement.

2. Tyre according to Claim 1, wherein the ratio TW/SW is less than or equal to 73%.

3. Tyre according to Claim 1 or 2, wherein the ratio TW/RW is less than or equal to 83%.

4. Assembly formed by a mounting rim (5) and a tyre according to any one of Claims 1 to 3.

**Patentansprüche**

1. Reifen, der eine Drehachse besitzt und Folgendes umfasst:

zwei Wulste (20), die entworfen sind, um mit einer Montagefelge (5) in Kontakt zu gelangen, wobei jeder Wulst wenigstens eine ringförmige Verstärkungsstruktur (70) aufweist, wodurch eine Mittelebene senkrecht zu der Drehachse des Reifens definiert wird, die sich in gleichem Abstand von den ringförmigen Verstärkungsstrukturen jedes Wulstes befindet, wobei die ringförmigen Verstärkungsstrukturen in irgendeinem radialen Querschnitt einen radial innersten Punkt (71) haben;

zwei Seitenwände (30), die die Wulste radial auswärts verlängern, wobei die beiden Seitenwände in einer Lauffläche verbunden sind, die eine Laufflächenverstärkung (80, 90) aufweist, wobei die Laufflächenverstärkung zwei axiale Enden besitzt, wobei der Laufflächenverstärkung ein Reifenprofil (40) überlagert ist; und

wenigstens eine Karkassenverstärkung (60), die sich von den Wulsten durch die Seitenwände bis zu der Lauffläche erstreckt, wobei die Karkassenverstärkung mehrere radial orientierte Karkassenverstärkungselemente umfasst und in den beiden Wulsten durch eine Aufwärtswindung um die ringförmige Verstärkungsstruktur verankert ist;

**dadurch gekennzeichnet, dass**

dann, wenn der Reifen an der Montagefelge angebracht ist und auf seinen Betriebsdruck aufgepumpt ist:

der Reifen eine maximale axiale Breite SW besitzt, derart, dass das Verhältnis TW/SW ≤ 75 %, wobei TW den axialen Abstand zwischen den zwei axialen Enden (189, 289) der Laufflächenverstärkung bezeichnet und die maximale axiale Breite SW bei einem radialen Abstand X von dem radial innersten Punkt der ringförmigen Verstärkungsstrukturen erreicht wird;

wobei der axiale Abstand RW der beiden Schnittpunkte der axialen Richtung, die durch den radial innersten Punkt der ringförmigen Verstärkungsstrukturen verläuft, mit der äußeren Oberfläche des Reifens derart ist, dass TW/RW ≤ 85 %;

der Reifen die drei folgenden Bedingungen erfüllt: X/SH ≤ 50 %, Y/SH ≥ 80 % und Z/SH ≥ 90 %, wobei SH den Abstand zwischen dem radial äußersten Punkt des Reifens und dem radial innersten Punkt der ringförmigen Verstärkungsstrukturen bezeichnet, Y den radialen Abstand zwischen (i) den Punkten der Karkassenverstärkung, die die gleichen axialen Positionen wie die axialen Enden der Laufflächenverstärkung haben, und (ii) dem radial innersten Punkt der ringförmigen Verstärkungsstrukturen bezeichnet und Z den radialen Abstand zwischen dem radial äußersten Punkt der Karkassenverstärkung und dem radial innersten Punkt der ringförmigen Verstärkungsstrukturen bezeichnet;

der Absolutwert des Winkels α (alpha) zwischen der Tangente an die Karkassenverstärkung an den Punkten der Karkassenverstärkung, die die gleichen axialen Positionen wie die axialen Enden der Laufflächenverstärkung haben, und der axialen Richtung kleiner oder gleich 22° ist; und

an irgendeinem der Punkt der Karkassenverstärkung der Krümmungsradius ρ derart ist, dass:

$$\rho = \frac{R_S^2 - R_E^2}{2R}$$

wobei $R_S$ der radiale Abstand zwischen der Drehachse des Reifens und dem radial äußersten Punkt (360) der Karkassenverstärkung ist, $R_E$ der radiale Abstand zwischen der Drehachse des Reifens und der axialen Position, an der der Reifen seine maximale axiale Breite SW erreicht, ist und R der radiale Abstand zwischen der Drehachse des Reifens und dem Punkt der Karkassenverstärkung ist.

2. Reifen nach Anspruch 1, wobei das Verhältnis TW/SW kleiner oder gleich 73 % ist.

3. Reifen nach Anspruch 1 oder 2, wobei das Verhältnis TW/RW kleiner oder gleich 83 % ist.

4. Anordnung, die durch eine Montagefelge (5) und einen Reifen nach einem der Ansprüche 1 bis 3 gebildet ist.

**Revendications**

1. Pneumatique ayant un axe de rotation et comportant :

deux bourrelets (20) destinés à entrer en contact avec une jante de montage (5), chaque bourrelet comportant au moins une structure annulaire de renforcement (70), définissant un plan médian perpendiculaire à l'axe de rotation du pneumatique et se situant à équidistance des structures annulaires de renforcement de chaque bourrelet, les structures annulaires de renforcement ayant, dans toute section radiale, un point (71) radialement le plus à l'intérieur ;

deux flancs (30) prolongeant les bourrelets radialement vers l'extérieur, les deux flancs s'unissant dans un sommet comprenant une armature de sommet (80, 90), ayant deux extrémités axiales, surmontée d'une bande de roulement (40) ;

au moins une armature de carcasse (60) s'étendant depuis les bourrelets à travers les flancs jusqu'au sommet, l'armature de carcasse comportant une pluralité d'éléments de renforcement de carcasse orientés radialement et étant ancrée dans les deux bourrelets par un retournement autour de la structure annulaire de renforcement, **caractérisé en ce que** lorsque le pneumatique est monté sur une jante de montage et gonflé à sa pression de service :

le pneumatique a une largeur axiale maximale SW telle que le ratio TW/SW ≤ 75%, où TW désigne la distance axiale entre les deux extrémités axiales (189, 289) de l'armature de sommet, la largeur axiale maximale SW étant atteinte à une distance radiale X du point radialement le plus à l'intérieur des structures annulaires de renforcement ;

la distance axiale RW des deux point d'intersection de la direction axiale passant par le point radialement le plus à l'intérieur des structures annulaires de renforcement avec la surface extérieure du pneumatique est telle que TW/RW ≤ 85% ;

le pneumatique satisfait aux trois conditions : X/SH ≤ 50%, Y/SH ≥ 80% et Z/SH ≥ 90%, où SH désigne la distance entre le point radialement le plus à l'extérieur du pneumatique et le point radialement le plus à l'intérieur des structures annulaires de renforcement, Y désigne la distance radiale entre (i) les points de l'armature de carcasse ayant les mêmes positions axiales que les extrémités axiales de l'armature de sommet, et (ii) le point radialement le plus à l'intérieur des structures annulaires de renforcement, et Z désigne la distance radiale entre le point radialement le plus à l'extérieur de l'armature de carcasse et le point radialement le plus à l'intérieur des structures annulaires de renforcement ;

la valeur absolue de l'angle $\alpha$ (alpha) entre la tangente à l'armature de carcasse dans les points de l'armature de carcasse ayant les mêmes positions axiales que les extrémités axiales de l'armature de sommet et la direction axiale est inférieure ou égal à 22° ; et

en tout point de l'armature de carcasse, le rayon de courbure p est tel que

$$\rho = \frac{R_S^2 - R_E^2}{2R},$$

où $R_S$ est la distance radiale entre l'axe de rotation du pneumatique et le point (360) radialement le plus à l'extérieur de l'armature de carcasse, $R_E$ est la distance radiale entre l'axe de rotation du pneumatique et la position axiale où le pneumatique atteint sa largeur axiale maximale SW, et R est la distance radiale entre l'axe de rotation du pneumatique et le point de l'armature de carcasse considéré.

2. Pneumatique selon la revendication 1, dans lequel le ratio TW/SW est inférieur ou égal à 73%.

3. Pneumatique selon la revendication 1 ou 2, dans lequel le ratio TW/RW est inférieur ou égal à 83%.

4. Ensemble formé par une jante de montage (5) et un pneumatique selon l'une quelconque des revendications 1 à 3.

**FIG. 1**
**(PRIOR ART)**

**FIG. 2**
**(PRIOR ART)**

FIG. 3

**FIG. 4**

**FIG. 5**

**EP 2 734 386 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6082423 A
- GB 2224703 A
- WO 1999022952 A